(19) Europäisches Patentamt
European Patent Office
Office européen des brevets

(11) **EP 3 333 600 A1**

(12) **EUROPEAN PATENT APPLICATION**

(43) Date of publication:
**13.06.2018 Bulletin 2018/24**

(51) Int Cl.:
**G02B 5/00** (2006.01)     **G02B 5/20** (2006.01)
**G02B 5/28** (2006.01)

(21) Application number: **16202392.3**

(22) Date of filing: **06.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **CSEM Centre Suisse d'Electronique et de Microtechnique SA - Recherche et Développement 2002 Neuchâtel (CH)**

(72) Inventors:
• **STANLEY, Ross**
  **1066 Epalinges (CH)**
• **TIMOTIJEVIC, Branislav**
  **1006 Lausanne (CH)**
• **HOOGERWERF, Arnold Christiaan**
  **2036 Cormondréche (CH)**
• **DUNBAR, Liza Andrea**
  **2072 Saint-Blaise (CH)**

(74) Representative: **Gevers SA**
  **Rue des Noyers 11**
  **2000 Neuchâtel (CH)**

(54) **TUNABLE OPTICAL DEVICES AND THEIR METHODS OF MANUFACTURING**

(57)     An optical device (1) is disclosed comprising an electrically conductive membrane (10) comprising a two dimensional non-periodic array (13) of sub-wavelength through-holes (12). The electrically conductive membrane (10) is arranged to reflect and transmit at least a portion of an incident light beam on the optical device (1) so that little or no loss through diffraction, scattering or the excitation of surface plasmons of the incident and transmitted light beam by the optical filter (1) occurs.

A tunable Fabry-Perot filter (50) is also disclosed comprising at least one optical device (1) comprising an electrically conductive membrane (10) comprising a two dimensional non-periodic array of sub-wavelength through-holes. The invention relates also to methods of fabrication of the optical device (1) and the tunable Fabry-Perot filter (50). The invention discloses also a method to tune the tunable Fabry-Perot filter (50) by a postprocessing etching technique.

*F i g . 2a*

*F i g . 2b*

**Description**

**Technical Field**

The present invention relates to the field of optical devices. More particularly, the present invention relates to micro-machined narrow-band optical devices, in particular optical filters comprising an electrically conducting membrane comprising an array of apertures.

**State of the art**

Optical filters are important optical elements that are commonly used in a variety of optical systems and optical components. In particular, a great variety of optical systems and devices require the use and incorporation of narrow-band optical filters for applications such as chip scale spectrometers, color image sensors, hyperspectral image sensors, color flat panel displays.

A well-known narrow-band filter is a multilayer dielectric filter comprising a stack of dielectric layers such as $TiO_2$ and $SiO_2$ layers. Multilayer dielectric filters are limited to the available materials that are transparent in the visible and infrared part of the electromagnetic spectrum. Also, making dielectric filter stacks can be difficult and expensive to make especially in the infrared as the filter stack thickness is proportional to the operating wavelength.

The simplest narrowband optical filter that can be fabricated consist in two metal layers that are separated by a spacer. These filters, known as Fabry-Perot filters, are quite simple to fabricate and cheap. On the other hand they have two major drawbacks. The first drawback is that the maximum optical transmission is limited by the intrinsic absorption in the metal layers. In the visible spectrum, this limits the transmission and the linewidth of the transmitted optical beam by the filter. A narrow linewidth filter has a poor transmission and vice versa - a filter with good transmission has a broad linewidth. Secondly, the optical characteristics of the filter cannot be changed once the filter is fabricated. More precisely, the central wavelength of the transmitted beam cannot be modified as it is fixed by the materials and geometry of the Fabry-Perot filter. Furthermore it would be extremely difficult to realize a matrix of Fabry-Perot filters having each different central transmitted wavelength, as the thickness of the spacer layer would have to be different across the wafer on which the filter layers are deposited. Taking into account that making Fabry-Perot filter requires a stringent control of the thicknesses and the fact that the process requires multiple processing steps, making matrices would be a difficult task.

In order to avoid the use that stack of dielectric layers and also to cope with the limitations of Fabry-Perot filter based on continuous metal layers some developments have been made based on plasmonic filters. Plasmonic filters are described for example in: E. Shaner et al., Plasmonic Filters, Sandia Report SAND2009-5990, sep. 2009.

In a realization disclosed in PCT/US2007/026071, a Fabry-Perot filter is proposed that comprises two metal films, separated by a spacer, and in which at least one of the metal layers comprises a periodic subwavelength hole structure or a periodic array of metallic islands separated by subwavelength sized openings. The device in in PCT/US2007/026071 has an embedded plasmonic metal filter comprising an array of periodic subwavelength apertures. The plasmonic device array patterns are configured such that when light is incident on the array structures, at least one plasmon mode is resonant with the incident light to produce a transmission spectral window with the desired spectral profile, bandwidth and beam shape. The transmission spectral window functions as an embedded passband filter for the Fabry-Perot filter.

The plasmonic filter in the device disclosed in PCT/US2007/026071 has a high reflectivity but has a high absorption loss. Also, because of the periodic structure of the array of holes the plasmonic device of PCT/US2007/026071, diffraction effects are important and the device is also prone to scattering losses which limits the filter performance. The high absorption losses, the diffraction and scattering prohibit achieving a high intensity of the transmitted optical beam.

**Summary of the invention**

It is the aim of this invention to provide an optical device and a Fabry-Perot filter having improved optical performances relative to the filters and Fabry-Perot filters of prior art.

The invention is also achieved by a method to fabricate the optical device and a method to fabricate the Fabry-Perot filter.

More precisely the invention is achieved by providing an optical device comprising an electrically conductive membrane defining a plane and comprising a two dimensional array of through-holes, extending through a thickness of the electrically conductive membrane between opposite surfaces being parallel to said plane, the electrically conductive membrane being arranged to reflect and transmit at least a portion of an incident light beam on the optical filter.

The through-holes form apertures in said opposite surface and have a circumference, defined in any cross section parallel to said plane, of less than the wavelength of said incident light beam. The through-holes define furthermore a structural factor S(k), being the Fourier transform of the positional arrangement of the through-holes in the membrane:

$$S(k) = \frac{1}{N} \times \left| \sum_{j=1}^{N} exp\left(i\vec{k} \cdot \vec{r_j}\right) \right|^2$$

where $k = |\vec{k}| = 2n_{max}\pi/\lambda$ , $\vec{r_j}$ defines the position of the center of each aperture and $\vec{k}$ defines the direction of an incident light ray at said center, said structural factor S(k) defining a value K so that

$$\int_{kmin}^{2K} S(k)dk \leq 0.1,$$ wherein $k_{min} = 2n_{min}\pi/L_{max}$

$L_{max}$ being defined as the largest dimension of the optical filter defined in said plane and k being defined between $k_{min}$ and K.

In an embodiment $\int_{kmin}^{2K} S(k)dk < 0.05$.

In an embodiment $\int_{kmin}^{2K} S(k)dk = 0$.

In an embodiment said electrically conducting membrane is made of a material having a dielectric constant comprising a real part and an imaginary part, said real part being smaller than -2 and an absolute value of the ratio of the imaginary part to the real part of the dielectric constant being less than 0.1.

In an embodiment at least a dielectric layer is arranged to at least one side of said electrically conductive membrane.

In an embodiment said dielectric layer comprises pores.

In an embodiment said pores comprise at least a portion of through-holes extending from one side of the dielectric layer to an opposite side of the dielectric layer.

In an embodiment said electrically conducting membrane is a metallic membrane.

In an embodiment said electrically conducting membrane comprises at least two different arrays of holes.

The invention is also achieved by a tunable Fabry-Perot filter comprising an optical device as described before and which is arranged on a first surface of a gap layer and which further comprising a reflective layer arranged on a second surface of the gap layer opposite and parallel to said first surface. Said reflective layer comprises an array of through-holes.

In an embodiment the reflective layer is a second electrical conducting membrane.

In an embodiment the second electrical conducting membrane is a second optical filter as described above.

In an embodiment the reflective layer is a stack of dielectric layers.

In an embodiment the gap layer comprises pores.

In an embodiment said pores are channels extending through a thickness of said gap layer between said first surface and the second surface thereof, said channels connecting the through holes of the first optical device and the reflecting layer.

In an embodiment the gap layer is an air layer.

In an embodiment the gap layer comprises at least a dielectric layer.

The invention is also achieved by a method of fabrication of the optical filter and comprising the steps of:

a) providing an SOI Silicon on Insulator (SOI) wafer comprising a handle layer, an insulating layer and a device layer,

- said device layer having a device front surface and a device back surface in contact with said insulating layer,
- said insulating layer having an insulating front surface to the side of said device layer and an insulating back surface opposite to said insulating front surface,
- said handle layer having a handle layer back surface away from said insulating layer and a handle layer front surface in contact with said insulating layer;

b) depositing an electrically conductive layer on said device front surface , said electrically conductive layer having a front surface away from said device layer;

c) realizing a mask comprising apertures having the distribution of the array of holes as defined in before;

d) realizing an array of holes in said device layer having the distribution of the array of through-holes as described before and by using said mask and by using UV illumination and plasma etching or chemical etching techniques;

e) etching the electrically conducting layer and the device layer in a single etching operation so as to realize the array of through-holes extending from said front surface to said device back surface ;

f) realizing by photolithographic and DRIE etching techniques a back opening in the handle wafer, said back opening extending from said handle layer back surface to said insulating back surface ;

g) etching away the thickness of at least a portion of said insulating layer facing said back opening, so as to form an array of through-holes of which through- holes extend from said front surface to said back opening.

In an embodiment of the method of fabrication of the optical filter, between step b) and set c) a dielectric layer is formed, on said electrically conducting layer, said dielectric layer having a front dielectric surface to the side away from said device layer. In this embodiment step e) comprises the etching through said dielectric layer, so as to form an array of through-holes of which through- holes extend from said front dielectric surface to said device layer back surface.

An embodiment of the method of fabrication of a Fabry-Perot filter comprises the steps of:

a) providing a first optical filter realized according the method described above;

b) providing a second SOI wafer comprising a second device layer , a second insulation layer and a second handle layer , said second insulation layer being in between and in contact with said second device layer and said second handle layer;

c) structuring, by etching techniques, said second SOI wafer so as to provide a spacing structure comprising a spacer layer;

d) providing a second optical filter realized according the method described before;

e) arranging said spacing layer between said first and second optical filter;

f) fixing by bonding, soldering or gluing techniques said first and second optical filter to said second SOI wafer so as to form a Fabry-Perot filter comprising said spacer layer arranged between said first and second optical filter.

In an embodiment of the method of fabrication of a Fabry-Perot filter step c) is realized by:

-    etching a central depression in the device layer of said second SOI wafer, said depression having a lateral width larger than the width of said electrically conducting layer of said first optical filter;

-    etching at least two suspended beams in said device layer being connected to the isolation layer of said second SOI wafer;

step e) is realized by:

-    positioning said first optical filter so that its electrically conducting layer is facing and is parallel to said depression of the structured second SOI wafer.

-    applying a liquid between the electrically conducting layer of said first optical filter and said suspended beams and press said first optical filter and said second SOI wafer until a portion of said device layer front surface is in contact with said at least two suspended beams ;

-    removing said first optical filter from said second SOI wafer so that at least a portion of said at least two suspended beams are attached, by capillary forces, to the device layer of said first optical filter, so as to form at least two spacers fixed to the device layer of said first optical filter ;

and wherein step f) comprises:

-    aligning said two optical filters so that said their electrically conducting layers are facing and are parallel, and so that said at least two suspended beams are in contact with at least a portion of the device layer of said second optical filter;

In an embodiment of the method to fabricate a Fabry-Perot filter step c) is realized by:

- - etching said second SOI wafer so as to realize a first aperture larger than the width of said first and said second optical filter;

- etching in said second SOI wafer a second aperture larger than the width of said first and said second optical filter and having a diameter smaller than said first aperture , said second and said first aperture forming a through aperture and a shoulder in said second SOI wafer;

and said step e) is realized by:

- orienting said first and said second optical filter so that each optical filter has its electrically conducting layer facing opposite sides of said shoulder;

An embodiment the method to fabricate a Fabry-Perot filter comprises the steps of:

- providing two optical filters realized according to the steps described above;
- realizing at least three metal bumps on at least on of said optical filters ;
- aligning said two optical filters so that their electrically conducting layers are facing;
- realizing the attachment of said first and second optical filter by thermocompression.

The invention is also achieved by a method to tune the optical characteristics of the tunable Fabry-Perot filter as described before. This tuning method comprises the following steps:

a) providing a tunable Fabry-Perot filter;
b) etching a portion of said gap layer by etching through said through-holes.

In an embodiment of the method to tune the tunable Fabry-Perot filter, the etching is performed so as that that the central transmitted wavelength of a transmitted light beam by said Fabry-Perot filter is changed.

In an embodiment of the method to tune the Fabry-Perot to tune the optical characteristics of the tunable Fabry-Perot filter the etching is performed so that the spectral width of a transmitted light beam by said Fabry-Perot filter is changed.

## Brief description of the drawings

Further details of the invention will appear more clearly upon reading the following description in reference to the appended figures:

- Fig. 1 a and Fig. 1b show two optical devices of the invention;
- Fig. 1c shows an optical device of the invention comprising a porous dielectric layer;
- Fig.2a shows a tunable Fabry-Perot filter comprising a dielectric layer between two optical devices of the invention;
- Fig.2b shows a tunable Fabry-Perot filter comprising a porous dielectric layer;
- Figs.3 a-c shows the steps of a manufacturing process of an optical device of the invention;
- Figs.4 a-c shows the steps of a manufacturing process of a tunable Fabry-Perot filter comprising a spacer realized with a structured SOI wafer;

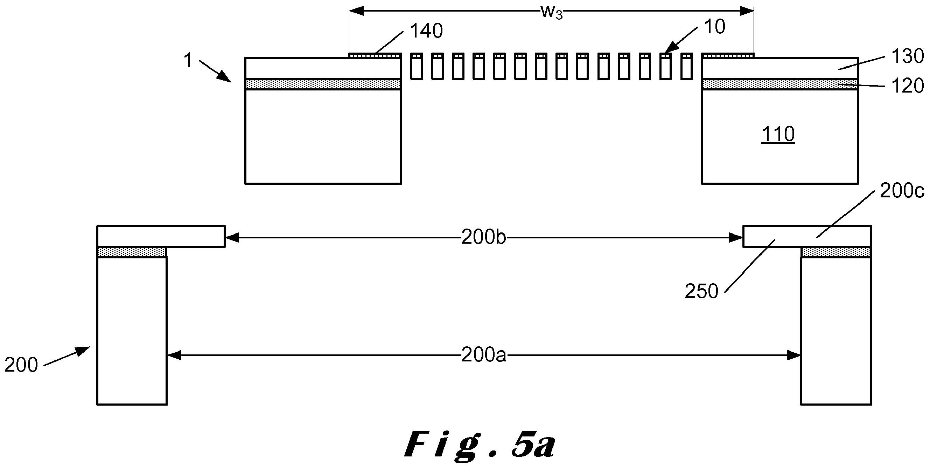

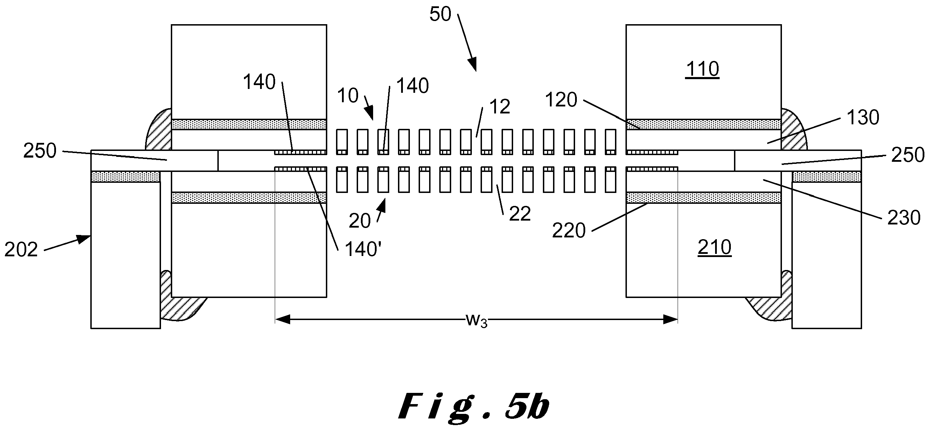

- Figs.5 a-b show the steps of another manufacturing process of a tunable Fabry-Perot filter comprising a spacer realized with a structured SOI wafer;
- Fig.6 a-b shows the steps of a manufacturing process of a tunable Fabry-Perot filter comprising a metallic spacer;
- Fig.7 a-d shows the steps of a manufacturing process of a tunable Fabry-Perot filter comprising a dielectric gap layer;
- Fig.8 shows simulation results obtained with a conventional Fabry-Perot filter and a tunable Fabry-Perot filter of the invention made of two metal layers and a glass gap layer;
- Fig. 9 shows the transmission of a realized Fabry-Perot filter of the invention in function of the wavelength of the incident light on the Fabry-Perot filter.

## Embodiments of the invention

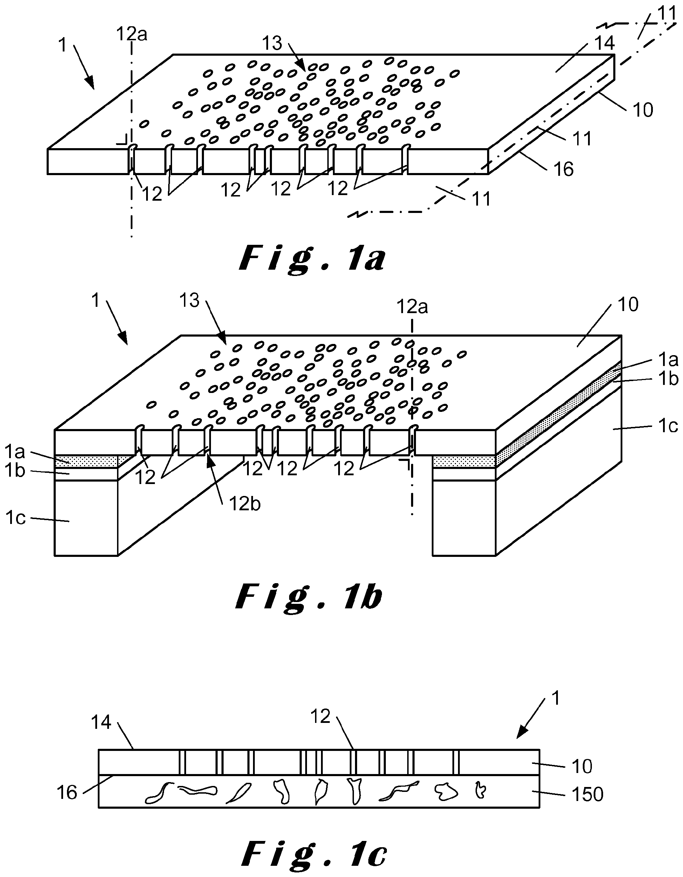

Fig.1a and Fig.1b illustrate two preferred embodiments of the optical device 1.

The optical device 1 of the invention comprises an electrically conductive membrane 10, also defined as first reflecting layer, having a front surface 14 and a back surface 16 and defining a plane in between said front and back surface 16, and comprises a two dimensional non-periodic array 13 of through-holes 12, extending through a thickness of the electrically conductive membrane 10 between said opposite surfaces 14, 16. The electrically conductive membrane 10 is arranged to reflect and transmit at least a portion of an incident light beam on the optical device 1. Therefore the optical device 1 is also defined as an optical reflector or a mirror that is semi-transparent. The optical device 1 may also be defined as an optical filter.

It is understood that the optical device 1 may be a single electrically conductive layer 10 as illustrated in Fig. 1a. In variants the optical device 1 may comprise the electrically conductive layer 10 arranged to a holder or frame or support as illustrated in Fig. 1b. The electrically conductive layer 10 and its supporting frame may be realized, as explained further in the method of fabrication, in structured silicon on insulator wafer, hereafter defined as an SOI wafer. Said supporting frame may comprise several layers 1 a, 1 b, and 1 c such as shown in Fig. 1 a.

Said through-holes 12 forming apertures 12a, 12b respectively in said opposite surfaces 14,16, and define a structural factor S(k), being the Fourier transform of the positional arrangement of the through-holes in the plane 11 of the electrically conducting membrane 10:

$$S(k) = \frac{1}{N} \times \left| \sum_{j=1}^{N} exp\left(i\vec{k} \cdot \vec{r_j}\right) \right|^2$$

wherein $k = |\vec{k}| = 2n_{max}\pi/\lambda$ , $\vec{r_j}$ defines the position of the center of each aperture 12a and $\vec{k}$ defines the direction of an incident light ray at said center,

said structural factor S(k) defining a value K so that

$$\int_{kmin}^{2K} S(k)dk \le 0.1, \text{ wherein } k_{min} = 2n_{min}\pi/L_{max}$$

$L_{max}$ being defined as the largest dimension of the optical filter defined in said plane (11),
k being defined between $k_{min}$ and K.

In an embodiment $\int_{kmin}^{2K} S(k)dk < 0.05$.

In an embodiment $\int_{kmin}^{2K} S(k)dk = 0$.

The through holes have a circumference, defined in any cross section parallel to said plane, that is smaller than the wavelength of the incident light for which the optical device is designed. The through holes may have any shape. It is understood that preferably the holes 12 are perpendicular to said plane 11 and have preferably a cylindrical shape. But in variants the holes 12, each defining a hole axis 12a, may have a slight angle relative to the perpendicular axis to said plane 11. The holes may also have non-uniform cross sections, defined in any plane perpendicular to said hole axis 12a. In particular said aperture 12a may have a different size and shape as the aperture 12b.

The distribution of the through-holes 12 as defined by the formulas above allow to pass a light beam through the optical device1 without perturbing an incident and transmitted light beam by the optical filter so that no significant diffraction and/or scattering effects occur.

Any object used in as part of a filter should have low loss in order to have a high potential transmissivity. In a planar structure without any structuration, loss is only due to absorption in the layer. With an array of through holes, light can be scattered by the said holes into real and evanescent waves. The former lead to scattering and diffraction losses while the latter may excite surface plasmons (both localized and propagating). In all cases, power is lost from the principle direction of the impinging light. In order to keep these losses low enough the integral of the structural factor should be small, in this embodiment the other losses are less than 0.05 or preferably zero.

In a preferred embodiment said electrically conducting membrane 10 is made of a material having a dielectric constant at the wavelength of operation comprising a real part and an imaginary part, said real part being smaller than -2 and an absolute value of the ratio of the imaginary part to the real part of the dielectric constant being less than 0.1. A conducting membrane with these properties will have a bulk (unstructured, infinitely thick film) reflectivity of greater than 80%.

The essence of the invention is related to the fact that the invented electrically conducting membrane 10 , comprising a array of holes 13 with subwavelength holes 12 that are distributed a-periodically, also defined as random, has a very low absorption compared to structures of prior art as described in PCT/US2007/026071, which comprises a plasmonic filter having periodic holes.

Combining an electrically conductive layer 10 having an array of a periodic subwavelength aperture results in that the optical device 1 has simultaneously a high reflectivity and a low absorption, so a good ratio between the transmission and the absorption of the optical filter 1. The potential transmission of a layer (or stack of layers) is defined as $\Psi_T = T / (1-R)$. This represents the maximum possible transmission that can be achieved. In the absence of loss, the potential transmission is unity. In the presence of loss A where $T+R+A=1$, then $\Psi_T = T / (T+A)$ which is clearly always less then unity. The loss is a generalized loss term and could be due to diffraction or scattering as well as material loss. In a multilayered system, the potential transmission of the system is just the product of the potential transmission of the individual layers or sets of layers. The utility of a layer is limited by the potential transmission. If one wants to make filters with high transmission then the potential transmission should be high. If we want to make for example Fabry-Perot filters with a narrow finesse, then the reflectivity of the layers on each side of the FP cavity should have high reflectivity. Thus the utility of a layer in such a filter depends on having both a high potential transmission and simultaneously a high reflectivity, R.

Standard metal mirrors can either have high reflectivity and low potential transmissivity or vice versa. Despite the fact that metals in the infrared have higher reflectivity than in the visible, their potential transmissivity is considerably lower. Metal mirrors are not useful for making Fabry Perot filters in the infra-red. There are additional technical issues such as having very thin continuous metal layers which also make metal mirrors unfavourable for Fabry-Perot filters.

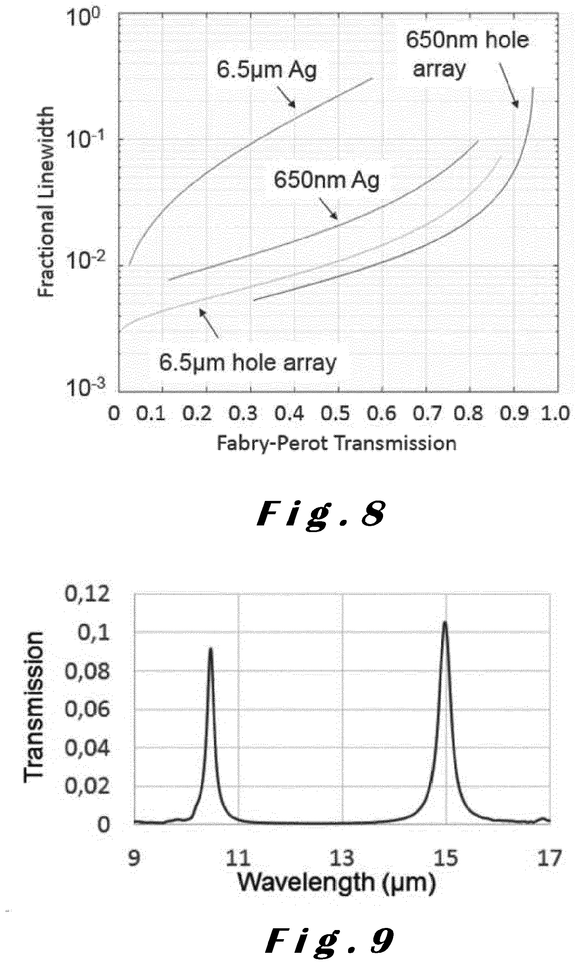

Figure 8 shows the potential transmission of a silver layer on glass as a function of reflectivity at 650 nm. The graph shows the comparison between a conventional Fabry-Perot optical filter without holes and a Fabry-Perot optical filter 50 of the invention comprising a reflecting layer comprising an array of holes 13. The width of the spacer layer in the Fabry-Perot is half the wavelength. In the case of the array of holes, the ratio or area of the holes to the area of the metal area is a factor of 1/4. For all cases the linewidth of the FP and the transmission depend both on the thickness of the metal layer, which is varied parametrically in this graph. The graph shows the comparative transmissions for the case of a Fabry-Perot designed for visible and infrared central wavelengths, respectively 0.65 $\mu$m and 6.5 $\mu$m respectively. Note that, for example, for 50% transmission the linewidth at 6.5$\mu$m improves by an order of magnitude when array of holes are used compared to the traditional FP filters without holes.

Therefore, by making the metal porous, the potential transmissivity can be increased by more than an order of magnitude while keeping the same reflectivity. The pores in the metal layer must be arranged so that they produce low loss, i.e. no or little scattering, no or little diffusion - any arrangement that has properties of so-called stealth hyper-uniformity are excellent candidates, there should also be little loss due to the coupling of surface plasmons, i.e., any periodicities n the structure should be at periods of at most half the operating wavelength. It should be noted that these arrangements leading to plasmonic filters while they have high potential transmission, they have low reflectivity. Finally the holes in the porous metal layer should be small enough that there are no propagating modes within those holes - otherwise the light will pass through the porous metal layer relatively unhindered and high reflectivity cannot be achieved. The general condition for this is that the circumference of the holes is less than the wavelength of light.

Another advantage of the invention is that it allows realizingoptical filter arrays that may be realized on a single membrane, each filter array may have a different optical characteristic.

In an embodiment the optical device 1 comprises a plurality of arrays 13 comprising at least two different arrays of holes 13, each array of holes having different optical characteristics. The at least two different array of holes 13 may have different holes dimensions and/or different hole positions and/or cross shapes of the holes. For example, a first section of the optical device 1 comprises a first array of holes 13a in the optical filter 1 may be arranged to transmit a visible light beam and a second section comprises a second array 13b that may be arranged to transmit near-infra-red light. In another example a visible light beam having a wavelength $\lambda$1 may be transmitted by a first section comprising a first array 13a of through holes and a second light beam having a wavelength $\lambda$2 may be transmitted by a second section of the optical device comprising a second array 13b of through holes. In a variant a plurality of different array of holes 13 are arranged as a linear array. In a variant a plurality of different array of holes 13 are arranged in the optical device 1 as a two dimensional array, for example a rectangular or circular shaped array. In a variant the plurality of array of holes may be adjacent array of holes or may be separated by areas of the optical device 1 that do not comprise holes.

The main applications of the optical device1 of the invention concern UV, visible or infrared light but the optical device1 might be used for far-UV and X-ray applications

The advantage of the invented electrically conducting membrane 10 is also outlined by the reported experimental results that are explained further.

In an embodiment a dielectric layer 150 may be arranged to at least one side of said electrically conductive membrane 10. This dielectric layer 150 may be a continuous layer or may comprise through-holes aligned with the through-holes 12 of the electrically conducting membrane 10. In an embodiment said dielectric layer 150 may be a porous layer, i.e. comprising pores. Said pores may be voids or apertures extending from one side of said dielectric layer 150. The pores may also be random shaped and distributed channels in said dielectric layer. As further described, one may deposit a metallic or dielectric reflecting layer on said dielectric layer 150 to form a tunable Fabry-Perot filter 50. By subsequently etching away a portion of said dielectric layer one may tune the optical characteristics of the so formed tunable Fabry-Perot filter. The pores in the dielectric layer improve the etching efficiency of the dielectric layer 150 in such a tunable Fabry-Perot filter. The cross-section of the pores in the dielectric layer in a plane parallel to the surface should be less than twice the operating wavelength.

In a variant, the electrically conducting layer may be a composite layer comprising layers made of different conducting materials, such as the combination of a metallic layer and a conducting polymer

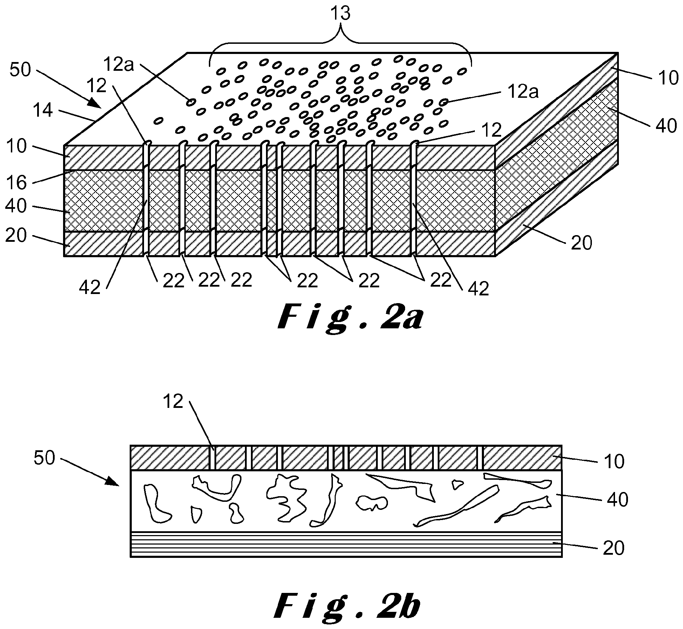

The invention is also achieved by a tunable Fabry-Perot filter 50, also defined as Fabry-Perot filter 50, which comprises at least one optical device 1 as described above. Said tunable Fabry-Perot filter 50, shown in Fig. 2a comprises a gap layer 40 defining a first surface 44 and a second surface 46 parallel and opposite to said first surface 44. The tunable Fabry-Perot filter 50 comprises at least a second reflecting layer 20, also defined as reflecting membrane, arranged to said second surface 46.

Said second reflecting layer 20 may be an electrically conducting layer, preferably a metal layer. The second reflecting layer may be a stack of dielectric layers. In a variant a metallic layer may be arranged to at least one of the sides of said stack.

The gap layer 40 is preferably a dielectric layer or may be a layer of air. The gap layer 40 may be a stack of dielectric layers. The gap layer may also be made of amorphous or crystalline and/or doped silicon. In a variant the gap 40 may comprise at least two layers made in a material chosen from: a metal, a dielectric or a semiconductor material.

In an embodiment said gap layer 40 and said second reflecting layer 20 have no through holes.

In a preferred embodiment said gap layer 40 is a porous gap layer, comprising pores as defined above in an embodiment of the optical device 1. In the case wherein the gap layer 40 is porous it may comprise pores, voids and through holes.

In an embodiment the gap layer 40 only comprises through holes which may not be aligned with the through holes 12 of the optical device 1.

In an embodiment said gap layer 40 has through-holes 42 extending from said first surface 44 to said second surface 46 and the through holes 42 are aligned with the through-holes 12 of said electrically conducting layer 10 but may be slightly misaligned by some nm.

In an embodiment of the tunable Fabry-Perot filter 50, said reflecting layer 20 comprises an array of through-holes 22 that may be slightly misaligned with the through holes 12 of said first electrically conducting layer 10 and/or the through holes 42 of the gap layer 40. Preferably the through-holes 22 in said reflecting layer20 are distributed a-periodically, but may be distributed periodically. In a variant the through-holes 22 in said reflecting layer 20 comprise a portion of holes 22 that have a periodic distribution.

In an embodiment the tunable Fabry-Perot filter 50 comprises a porous dielectric gap layer 40 and a dielectric reflecting stack 20 as illustrated in Fig.2b.

In an embodiment of the tunable Fabry-Perot filter 50, illustrated in Fig.2, the reflecting layer 20 is a second electrical conducting membrane. In a preferred embodiment the reflecting layer 20 is a second optical filter 1' that is identical to said first optical filter 1.

In an embodiment the dielectric gap layer 40 is a gap layer made in $SiO_2$ comprising gap channels 42 extending through the thickness of the gap 40, said channels 42 extending between said first surface 44 and said second surface 46 thereof. Said channels 42 connect the through-holes 12, 22 of respectively the first 10 and the reflecting layer 20. Even in the case that said second reflecting layer 20 is identical to the first electrically conducting membrane 10 is identical the second reflecting layer 20 may have a slight offset relative to the electrically conducting membrane 10. This offset may of some nm defined in a plane parallel to said plane 11 of the first electrical conducting membrane 10.

In a preferred embodiment the gap layer 40 is made of silicon (Si).This may be amorphous silicon or crystalline silicon. The silicon layer may be a doped silicon layer.

In an embodiment the gap layer 40 is an air layer. The advantage of having an air layer 40 in the tunable Fabry-Perot filter 50 is that at least one of said first electrically conducting membrane and said reflecting layer may be displaced in the direction perpendicular to said plane 11. In order to achieve this, an actuator may be adapted to the tunable Fabry-Perot filter 50. Actuators to move a membrane perpendicular to its plane are well known to the skilled person and will not be further described here. The method to fabricate a Fabry-Perot filter 50 comprising an air layer 40 is further described in the paragraphs of this document related to the method of fabrication.

The inventors have discovered that the alignment between the holes 12, 22 in the layers 110,120,130, 140 of the tunable Fabry-Perot filter 50 is not crucial for functioning of the filter if the critical dimension of the holes is much smaller than the operating wavelength and if the periodocity of the through holes 12 is smaller than the wavelength in both the surrounding medium, which is preferably air, and the material of the gap layer 40.

One of the main advantages of the tunable Fabry-Perot filter 50 of the invention is that the filter 50 may be tuned by a postprocessing process as described further. In a preferred embodiment the postprocessing is performed by etching the gap layer 40 through the through-holes. In an embodiment the uniform postprocess etching of the gap layer 40 allows to tune the optical characteristics of the Fabry-Perot filter 50. The tuning may consist of changing the central wavelength and/or the bandwidth of the Fabry-Perot filter 50.

In an embodiment the tunable Fabry-Perot filter 50 comprises portions that have different sections of the gap layer 40 that have different thickness, defined perpendicular to said plane 11. This may be achieved by etching away a portion of the gap layer 40 as further described. By etching away a portion of the gap layer the central wavelength and/or spectral width of the transmitted light by the Fabry-Perot filer may be tuned. This postprocessing of a tunable Fabry-Perot filter 50 allows realizing a tunable Fabry-Perot filter 50 that comprises an array of tunable Fabry-Perot filters realized in a single filter. The postprocessing may be made more efficient by using a porous dielectric gap layer 40, as the etching gases or chemicals may penetrate more easily in the gap layer 40 and as such enhancing the removal of material of the gap layer and as such changing considerably the local volume and refractive index of the gap layer.

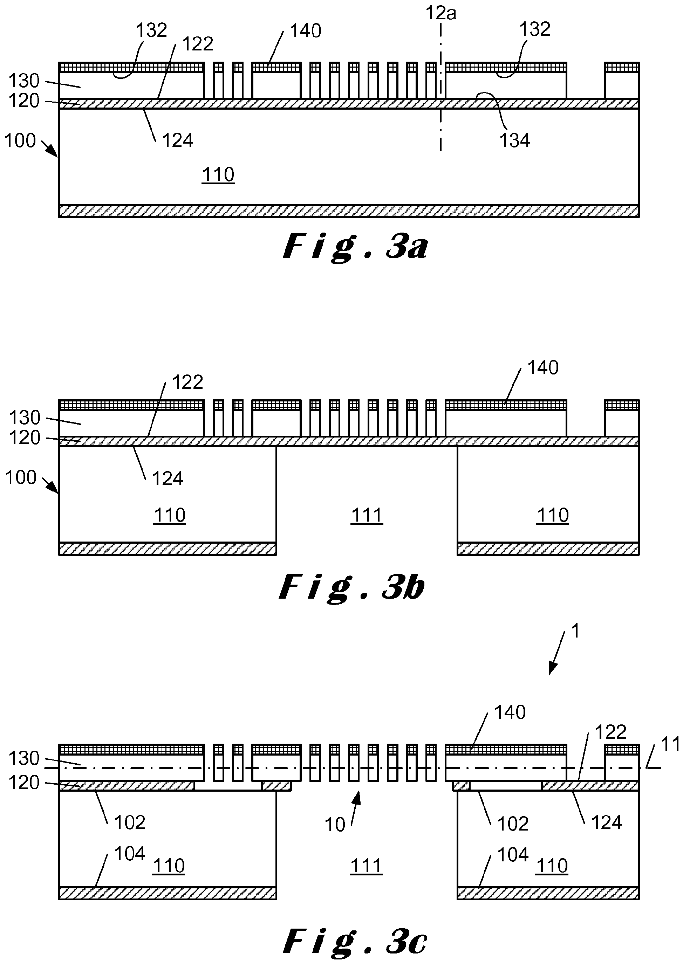

The invention is further achieved by method of fabrication of the optical device1, illustrated in Figs.3a-c comprising the steps of:

a) providing a Silicon on Insulator (SOI) wafer 100 comprising a handle layer 110, an insulating layer 120 and a device layer 130,

- said device layer 130 having a device front surface 132 and a device back surface 134 in contact with said insulating layer 120,
- said insulating layer 120 having an insulating front surface 122 to the side of said device layer 130 and an insulating back surface 124 opposite to said insulating front surface 122,
- said handle layer 110 having a handle layer back surface 104 away from said insulating layer 120 and a handle layer front surface 102 in contact with said insulating layer 120;

b) depositing an electrically conductive layer 140 on said device front surface 132, said electrically conductive layer 140 having a front surface 142 away from said device layer 130;

c) realizing a mask comprising apertures having the distribution of the array 13 of holes 12 as defined in claim1;

d) realizing an array 13 of holes 12 in said device layer 130 having the distribution of the array 13 of through-holes 12 as described in claim 1 and by using said mask and by using UV illumination and plasma etching or chemical etching techniques;

e) etching the electrically conducting layer 140 and the device layer 130 in a single etching operation so as to realize through-holes 13 extending from said device front surface 132 to said device back surface 134;

f) realize by photolithographic and DRIE etching techniques a back opening 111 in the handle wafer 110, said back opening 111 extending from said handle layer back surface 124 to said insulating back surface 124;

g) etching away the thickness of at least a portion of said insulating layer 120 facing said back opening 111, so as to form an array of through-holes13 of which through- holes 12 extend from said front surface 142 to said back opening 111.

In an embodiment of the method of fabrication of the optical device 1, illustrated in Fig. 3d, between said step b) and set c) a dielectric layer 150 is formed on said electrically conducting layer 140, said dielectric layer 150 having a front dielectric surface 152 to the side away from said device layer 130. In this embodiment step e) comprises the etching through said dielectric layer 150, so as to form an array of through-holes13 of which through- holes 12 extend from said front dielectric surface 152 to said device layer back surface 134.

The invention is also achieved by a method of fabrication of method a tunable Fabry-Perot filter 50 as described above. This method comprises the main steps of:

a) providing a first optical device 1 realized according to the above described method of fabrication;

b) providing a second SOI wafer 200 comprising a second device layer 230, a second insulation layer 220 and a second handle layer 210, said second insulation layer 220 is situated being in between and in contact with said second device layer 230 and said second handle layer 210;

c) structuring, by etching techniques, said second SOI wafer 200 so as to provide a spacing structure 202, defined as the structured second SOI wafer, comprising a spacer layer 240;

d) providing a second optical device 1' realized according the above described method of fabrication;

e) arranging said spacing layer 240 between said first and second optical filter 1, 1';

f) fixing by bonding, soldering or gluing techniques said first and second optical filter 1,1' to the structured second SOI wafer 200 so as to form a tunable Fabry-Perot filter 50 comprising said spacer layer 240 arranged between said first and second optical filter 1,1'.

Said spacing layer 240 may have different geometries such as an array of cantilevers or may be a shoulder structure as further described.

In an embodiment of the method of fabrication of a tunable Fabry-Perot filter, illustrated in Figs. 3a-d,

- step c) is realized by:

- etching a central depression 202 in the device layer 230 of said second SOI wafer 200 , said depression 202 having a lateral width w2 larger than the width w1 of said electrically conducting layer 10 of said first optical device 1;
- etch at least two suspended structures, preferably beams 204, 205, in said device layer 230 being connected to the isolation layer 220 of said second SOI wafer 200;

- step e) is realized by:

- positioning said first optical device 1 so that its electrically conducting layer 10 is facing and is parallel to said depression 202 of the structured second SOI wafer 200.
- applying a liquid between the electrically conducting layer of said first filter 1 and said suspended beams 204, 205 and press said first filter 1 and said second SOI wafer 200 until a portion of said device layer front surface 132 is in contact with said at least two suspended beams 204, 205;
- removing, said first optical device 1 from said second SOI wafer 200 so that at least a portion of said at least two suspended beams 204, 205 are snapped form the structured second SOI wafer and are attached, by capillary forces, as illustrated in Fig 3b to the device layer 130 of said first optical device 1, so as to form at least two spacers 400, 402 fixed to the device layer of said first optical filter 1;

and step f) comprises:

- aligning said two optical devices 1,1' so that said their electrically conducting layers 140, 140' are facing and are parallel, and so that said at least two suspended beams 204, 205 are in contact with at least a portion of the device layer 220 of said second optical filter 1'.

In this embodiment said steps a)-d) are illustrated in Fig.3a, step f) is illustrated in Fig.3a and step g) is illustrated in Fig.3a.

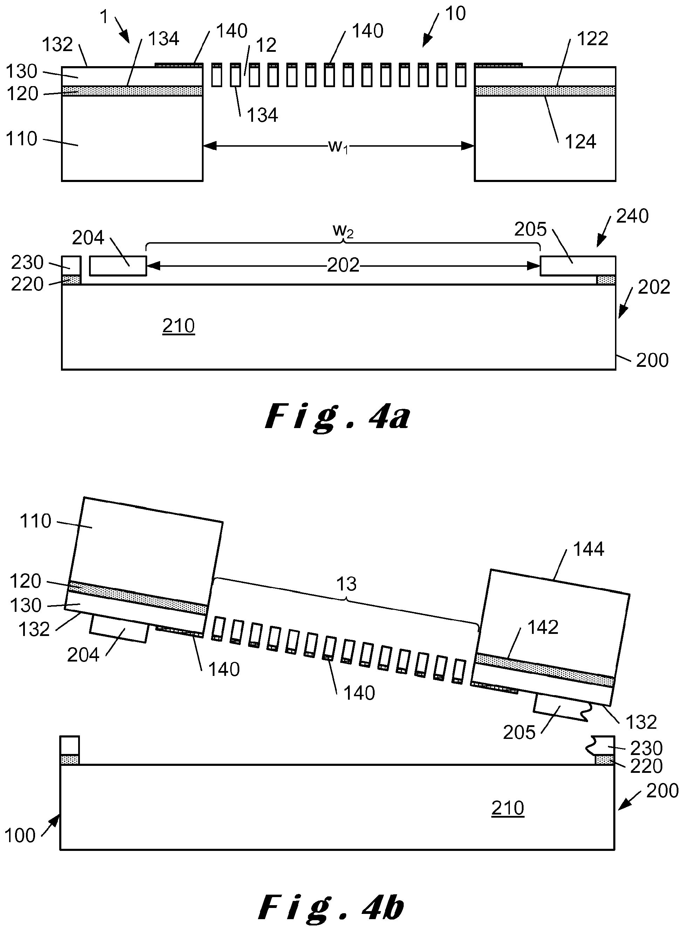

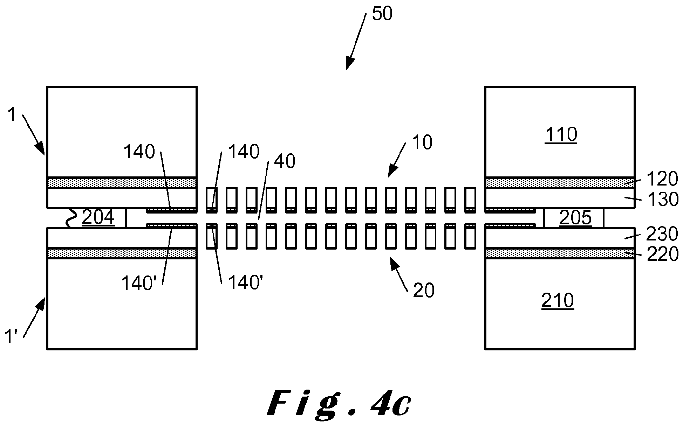

In another embodiment of the method to fabricate a tunable Fabry-Perot filter 50, illustrated in Figs 4a-b,

step c) is realized by (Fig.4a):

- etching said second SOI wafer 200 so as to realize a first aperture 200a larger than the width w3 of the electrically conducting layers 10,20 of said first and said second optical device 1,1';
- etching in said second SOI wafer 200 a second aperture 200b larger than the width of said first and said second optical device 1,1' and having a diameter smaller than said first aperture 200a, said second 200b and said first aperture 200a forming a through aperture and a shoulder 200c in said second SOI wafer 200, said shoulder being intended to be used as a spacer between said first and said second optical device 1, 1';

and wherein said step e) is realized by:

- orienting said first 1 and said second optical device 1' so that each optical device 1,1' has its electrically conducting layer 140, 140' facing opposite sides of said shoulder 200c ;

In this embodiment the two optical filters 1,1' are fixed to the spacing structure 202, i.e. the structured second SOI wafer 200, by a gluing technique as illustrated in Fig 4b: different variants of the fixing or attachment technique the two optical devices 1, 1' to the spacing structure 202 may be used such as welding or bonding techniques and the fixing may be performed between different parts of the tow optical device 1, 1' to the spacing structure 202. The alternatives of the fixing techniques well known and will not be further described here.

It should be understood that said shoulder 200c may have different shapes, such as a plurality of beams, or a ring shaped shoulder. It is also understood that said shoulder 200c and/or the first or second optical device 1,1' may comprise at least one adhesion layers allowing to fix at least one of said optical device 1,1' to said shoulder structure 200c. It is understood that this adhesion layer may be any adhesion layer such as a layer allowing to solder or to realize an attachment by any kind of fusion technique, including fusion by laser or heating techniques

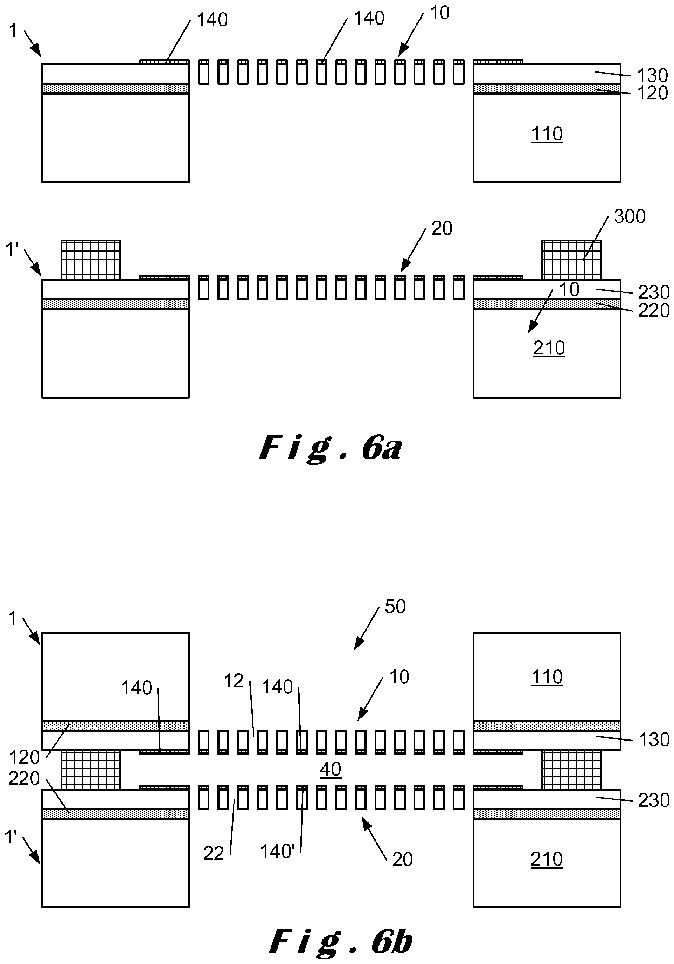

The invention is also achieved by a method to fabricate a tunable Fabry-Perot filter 50 of the invention and uses thermocompresion techniques, illustrated in Figs 6a, 6b and comprises the steps of:

- providing two optical devices 1, 1' realized according to process describes above;
- realize at least three metal bumps 300 on at least on of said optical filters 1,1';
- align said two optical devices 1,1' so that their electrically conducting layers 140, 140' are facing;
- realize the attachment of said first to said second optical device 1,1' by thermos-compression;

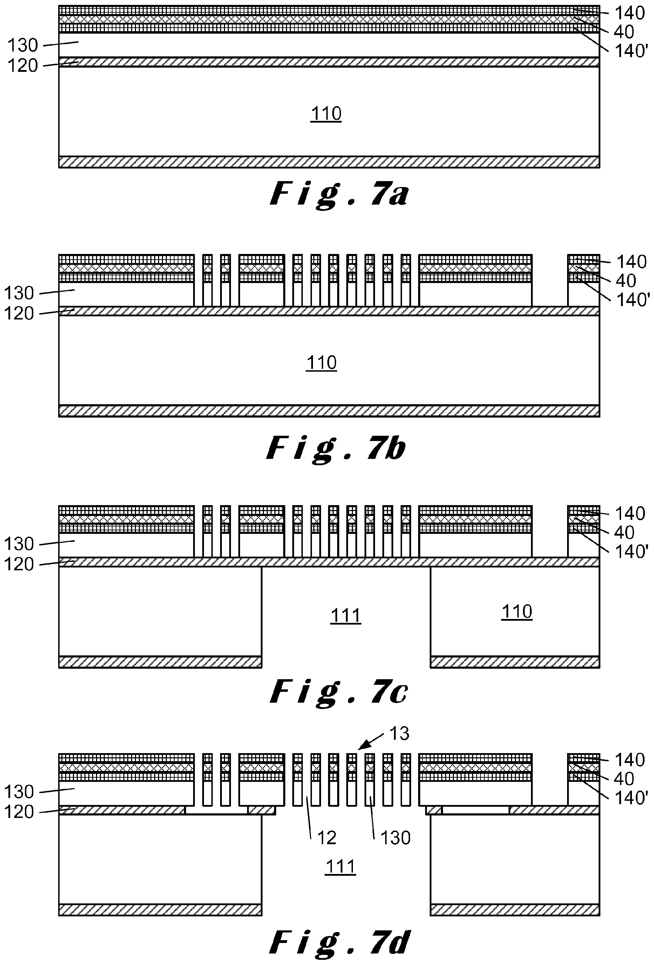

In an embodiment, a Fabry-Perot filter 50 comprising a dielectric layer 40 between two electrically conduction layers is realized according to process steps illustrated in Fig.7. In this embodiment the main process steps are the following.

Fig.7a illustrates the steps of:

- providing a SOI wafer 110;
- depositing a conductive layer 140';
- depositing a dielectric layer 40;
- depositing a second conductive layer 140.

Fig. 7b illustrates the steps of:

- realizing front holes and beams by photolithography
- etching the conductive layer 140;
- etching the dielectric layer 40;
- etching the second conductive layer 140';
- etching by DRIE the device layer;
- stripping a photoresist layer 160

Fig. 7c illustrates the steps of:

- opening a thick photoresist layer by photolithography technique;
- etching of the backside oxide;
- DRIE etching of the handle up to the buried oxide layer;
- Strip the remaining resist layer

Fig. 7d illustrates the steps of etching the buried oxide layer 120

It is also understood that by further process steps any remaining oxide layer may be removed, such as the device layer portions 130 as illustrated in Fig.7d.

The invention is also achieved by a method to tune the optical characteristics of the tunable Fabry-Perot filter 50 as described before. This tuning method comprises the following steps:

a) providing a tunable Fabry-Perot filter 50;
b) etching a portion of said gap layer 40 by etching through said through-holes (12).

In an embodiment of the method to tune the Fabry-Perot filter 50, the etching is performed so as that that the central transmitted wavelength of a transmitted light beam by said Fabry-Perot filter 50 is changed.

**Exemplary realisation and experimental results.**

Several Fabry-Perot filters of the invention have been realized and characterised. In an example a Fabry-Perot filter designed for infrared applications between 9-18 $\mu$m has the following technical features: The diameters of the holes 12 are 2$\mu$m and arranged in a hexagonal lattice with a period of 3.6$\mu$m. The measured Fabry-Perot 50 has a central silicon spacer of 5$\mu$m. A 50nm thick Au layer is deposited on both sides 44, 46 of the silicon layer 40. The holes 12 extend through the entire sandwich structure, i.e. the stack of layers Au-Si-Au. This Fabry-Perot filter 50 was measured in transmission using a liquid nitrogen cooled Mercury Cadmium Telluride detector in a Fourier transform infrared spectrometer microscope (Bruker-Hyperion). Figure 9 shows the transmission measurements. The two Fabry-Perot peaks have approximately 10% transmission and a 1.5% linewidth. It can be calculated from the free spectral range and the linewidth of the given filter that the finesse is around 43.5. Consequently, the effective reflectivity of the porous mirrors is around 93%. It has to be noticed that a conventional metal / silicon / metal Fabry-Perot having the same geometrical configuration but without comprising an array of holes, having a similar linewidth, would have a transmission of only 0.2%. The Fabry-Perot filter of the invention has a transmission that is 50 times higher than a conventional Fabry-Perot filter.

**Claims**

1. An optical device (1) comprising an electrically conductive membrane (10) defining a plane (11) and comprising a two dimensional array (13) of through-holes (12), extending through a thickness of the electrically conductive membrane (10) between opposite surfaces (14, 16) being parallel to said plane (11), the electrically conductive membrane (10) being arranged to reflect and transmit at least a portion of an incident light beam on the optical filter (1), wherein said through-holes (12) forming apertures in said opposite surfaces (14,16), and having a circumference, defined in any cross section parallel to said plane (11), of less than the wavelength of said incident light beam, the through-holes defining a structural factor S(k), being the Fourier transform of the positional arrangement of the through-holes in the membrane:

$$S(k) = \frac{1}{N} \times \left| \sum_{j=1}^{N} exp\left(i\vec{k} \cdot \vec{r_j}\right) \right|^2$$

where $k = \left|\vec{k}\right| = 2n_{max}\pi/\lambda$ , $\vec{r_j}$ defines the position of the center of each aperture and $\vec{k}$ defines the direction of an incident light ray at said center,
said structural factor S(k) defining a value K so that

$$\int_{kmin}^{2K} S(k)dk \leq 0.1$$

   wherein $k_{min} = 2n_{min}\pi/L_{max}$,
   $L_{max}$ being defined as the largest dimension of the optical filter defined in said plane (11),
   k being defined between $k_{min}$ and K.

2. The optical device (1) according to claim 1 wherein

$$\int_{kmin}^{2K} S(k)dk < 0.05$$

3. The optical device (1) according to claim 1 or claim 2, wherein

$$\int_{kmin}^{2K} S(k)dk = 0$$

4. The optical device (1) according any one of claims 1 to 3, wherein said electrically conducting membrane (10) is made of a material having a dielectric constant comprising a real part and an imaginary part, said real part being smaller than -2 and an absolute value of the ratio of the imaginary part to the real part of the dielectric constant being less than 0.1.

5. The optical device (1) according to any one of claims 1 to 4, wherein at least a dielectric layer is arranged to at least one side of said electrically conductive membrane (10).

6. The optical device (1) according to claim 5, wherein said dielectric layer comprises pores.

7. The optical device (1) according to claim 6, wherein said pores comprise at least a portion of through-holes extending from one side of the dielectric layer to an opposite side of the dielectric layer.

8. The optical device (1) according to any one of the preceding claims, wherein said electrically conducting membrane (10) is a metallic membrane.

9. The optical device (1) according to any one of the preceding claims, wherein said electrically conducting membrane (10) comprises at least two different arrays of holes (13a, 13b).

10. A tunable Fabry-Perot filter (50), comprising an optical device (1) according to any one of claims 1 to 9 arranged on a first surface (44) of a gap layer (40) and further comprising a reflective layer (20) arranged on a second surface (46) of the gap layer (40) opposite and parallel to said first surface (44), said reflective layer (20) comprising an array of through-holes.

11. The tunable Fabry-Perot filter (50) according to claim 10, wherein the reflective layer (20) is a second electrical conducting membrane, preferably a second optical device (1) according to any one of claims 1 to 9.

12. The tunable Fabry-Perot filter (50) according to claim 10, wherein the reflective layer (20) is a stack of dielectric layers.

13. The tunable Fabry-Perot filter (50) according to any one of claims 10-12, wherein the gap layer (40) comprises pores.

14. The tunable Fabry-Perot filter (50) according to claim 13, wherein said pores are channels (42) extending through a thickness of said gap layer (40) between said first surface (44) and the second surface (46) thereof, said channels (42) connecting the through holes (12), (22) of the first optical filter (10) and the reflecting layer(20).

15. The tunable Fabry-Perot filter (50) according to any one of claims 10 to 14, wherein the gap layer (40) is an air layer.

16. The tunable Fabry-Perot filter (50) according to any one of claims 10 to 14, wherein the gap layer (40) comprises at least a dielectric layer.

17. The tunable Fabry-Perot filter (50) according to one of claim 10 to 16, wherein the gap layer (40) comprises portions having different thicknesses.

**F i g . 1a**

**F i g . 1b**

**F i g . 1c**

**Fig. 2a**

**Fig. 2b**

**F i g . 3a**

**F i g . 3b**

**F i g . 3c**

**F i g . 4a**

**F i g . 4b**

50

1

110

140    140  40    10

120
130

204    205
230
220

140'    140'    20

1'

210

# Fig. 4c

*Fig. 5a*

**Fig.5b**

**Fig. 6a**

**Fig. 6b**

**F i g . 7a**

**F i g . 7b**

**F i g . 7c**

**F i g . 7d**

*Fig. 8*

*Fig. 9*

Europäisches
Patentamt

European
Patent Office

Office européen
des brevets

# EUROPEAN SEARCH REPORT

**Application Number**

EP 16 20 2392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | GB 2 528 682 A (ISIS INNOVATION [GB])<br>3 February 2016 (2016-02-03)<br>* page 6, line 15 - page 7, line 23 *<br>* figures 1,2 *<br>* page 8, lines 26-33 *<br>----- | 1-5,8,<br>10,11,16<br>9 | INV.<br>G02B5/00<br>G02B5/20<br>G02B5/28 |
| Y | EP 2 317 372 A1 (LG DISPLAY CO LTD [KR])<br>4 May 2011 (2011-05-04)<br>* paragraphs [0040] - [0042]; figure 3 *<br>----- | 9 | |
| X | US 2010/044585 A1 (KLUNDER DERK J W [NL]<br>ET AL) 25 February 2010 (2010-02-25)<br>* paragraphs [0068] - [0082]; figure 2 *<br>----- | 1,15 | |

TECHNICAL FIELDS
SEARCHED (IPC)

G02B

~~The present search report has been drawn up for all claims~~

| Place of search | Date of completion of the search | Examiner |
|---|---|---|
| Munich | 11 May 2017 | Stemmer, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5, 8-11, 15, 16

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 16 20 2392

The Search Division considers that the present European patent application does not comply with the requirements of unity of invention and relates to several inventions or groups of inventions, namely:

1. claims: 1-5, 8-11, 15, 16

     an optical device comprising a membrane with through holes solving th problem of being a building part for a Fabry Perot filter for wavelength selection;
                                          ---

2. claims: 6, 7, 13, 14

     a dielectric layer comprising pores solving the problem of improving the etching efficiency of the dielectric layer;
                                          ---

3. claim: 12

     a Fabry Perot filter having a second reflective layer being a stack of dielectric layers solving the problem of cost of manufacturing;
                                          ---

4. claim: 17

     a Fabry Perot filter having a gap layer comprising portions having different thicknesses solving the problem of selecting central wavelength and/or spectral width of the transmitted light.
                                          ---

## ANNEX TO THE EUROPEAN SEARCH REPORT
## ON EUROPEAN PATENT APPLICATION NO.

EP 16 20 2392

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2017

| Patent document cited in search report | | Publication date | Patent family member(s) | | Publication date |
|---|---|---|---|---|---|
| GB 2528682 | A | 03-02-2016 | GB 2528682 A | | 03-02-2016 |
| | | | WO 2016016635 A1 | | 04-02-2016 |
| EP 2317372 | A1 | 04-05-2011 | CN 102096224 A | | 15-06-2011 |
| | | | EP 2317372 A1 | | 04-05-2011 |
| | | | KR 20110047000 A | | 06-05-2011 |
| | | | US 2011102715 A1 | | 05-05-2011 |
| US 2010044585 | A1 | 25-02-2010 | BR PI0718219 A2 | | 12-11-2013 |
| | | | CN 101595380 A | | 02-12-2009 |
| | | | EP 2087344 A2 | | 12-08-2009 |
| | | | JP 5149299 B2 | | 20-02-2013 |
| | | | JP 2010508508 A | | 18-03-2010 |
| | | | US 2010044585 A1 | | 25-02-2010 |
| | | | WO 2008053442 A2 | | 08-05-2008 |

EPO FORM P0459

For more details about this annex : see Official Journal of the European Patent Office, No. 12/82

**EP 3 333 600 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007026071 W


**Non-patent literature cited in the description**

- **E. SHANER et al.** *Plasmonic Filters, Sandia Report SAND2009-5990,* September 2009